# EUROPÄISCHE PATENTSCHRIFT

(11) **EP 0 698 540 B1**
(45) Veröffentlichungstag und Bekanntmachung des Hinweises auf die Patenterteilung: **17.05.2000**
(21) Anmeldenummer: 95112639.0
(22) Anmeldetag: 11.08.1995
(51) Int. Cl.: B61C 9/52, B61F 3/16

(54) **Angetriebenes Fahrwerk für Schienenfahrzeuge**
Driven running gear for railway vehicles
Train de roulement entraîné pour véhicules ferroviaires

(30) Priorität: 24.08.1994 DE 4429889
(43) Veröffentlichungstag der Anmeldung: 28.02.1996
(73) Patentinhaber: Siemens Duewag Schienenfahrzeuge GmbH, 47829 Krefeld (DE)
(72) Erfinder: Piepenbreier, Ernst, Dipl.-Ing., D-45239 Essen (DE); Zok, Reinhold, Dipl.-Ing., D-47239 Duisburg (DE); ASBACH, Friedhelm, D-41564 Kaarst (DE); ELSNER, Karl-Heinz, D-41748 Viersen (DE); GEERS,Leo, D-41564 Kaarst (DE); HORN, Hilmar, D-41470 Neuss (DE)

(56) Entgegenhaltungen:
- EP-A- 0 052 244
- EP-A- 0 263 793
- EP-A- 0 384 512
- EP-A- 0 448 147

## Beschreibung

Die Erfindung bezieht sich auf ein angetriebenes Fahrwerk für Schienenfahrzeuge, insbesondere für Drehgestelle an Niederflurfahrzeugen.

Aus der EP 0 439 574 B1 ist ein angetriebenes Fahrwerk für Niederflur-Schienenfahrzeuge mit mindestens zwei gelenkig miteinander verbundenen Kastenteilen und zwei mit Lenkmitteln ausgestatteten Einzellaufwerken bekannt, wobei an einem Kastenteil an den Längsseiten jeweils zwischen zwei Rädern ein Motor und eine Bremse befestigt sind, die über radaußenseitig an beiden Einzellaufwerken angeordnete Kegelradgetriebe das Fahrwerk antreiben und bremsen. Zum Ausgleich der Relativbewegungen zwischen den fest an den Laufwerken angeordneten Kegelradgetrieben und dem Motor dienen dabei ausziehbare Gelenkwellen. Damit diese Gelenkwellen eine ausreichende Relativbewegung gewährleisten, vergrößert sich der Achsabstand zwischen den Rädern entsprechend, so daß aufwendige Lenkeinrichtungen für die Einzellaufwerke erforderlich sind.

In der EP 0 152 568 A1 ist eine kardanische Doppelkupplung beschrieben, wobei zwischen einer Hohlwelle und einer durch diese gehenden Welle an deren Ende elastische Gelenkkupplungen angeordnet sind. Diese Doppel-kupplung dient dabei zum Verbinden einer in einem Drehgestell oder -rahmen gelagerten Achse eines Achsantriebes für Schienenfahrzeuge mit einer die Achse mit Spiel umschließenden abtreibenden Hohlwelle eines Getriebes, das an der Stirnseite eines in Fahrtrichtung liegenden Elektromotors angeflanscht und zusammen mit dem letzteren im Drehgestell oder -rahmen befestigt ist. Hierbei sind jeweils zwei Räder über eine Achse miteinander verbunden und die beiden Achsen eines Drehgestelles besitzen mittig einen Antriebsmotor. Dieser Antriebsmotor behindert mit seiner Mittellage die Absenkung des Fuß-bodens, so daß bei Niederflurfahrzeugen kein in Längsrichtung durchgehender Fußboden möglich ist.

Aus der EP 0 263 793 A2 ist darüber hinaus ein zweimotoriges Zwischendrehgestell für zwei- oder mehrgliedrige Schienenfahrzeuge mit tiefgezogenem Boden bekannt, wobei die Räder einzeln gelagert sind und auf jeder Fahrwerklängsseite zwischen zwei hintereinander angeordneten Rädern mit kurzem Radstand am Drehgestellrahmen ein elektromechanischer Antrieb befestigt ist, der über in Wagenlängsrichtung angeordnete Läuferwellen und ein Winkelgetriebe mit den Rädern verbunden ist. Direkt am Antriebsmotor ist dabei ein Differential zum Ausgleich von geometrischen Rollunregelmäßigkeiten befestigt.

Der Erfindung liegt die Aufgabe zugrunde, ein angetriebenes Fahrwerk für Schienenfahrzeuge, insbesondere für Drehgestelle an Niederflurfahrzeugen, vorzuschlagen, bei dem die vorgenannten Probleme nicht auftreten.

Die Lösung dieser Aufgabe besteht in der Kombination der im Anspruch 1 angegebenen Merkmale. Die Unteransprüche 2 bis 5 enthalten sinnvolle Ausführungsformen dazu.

Der erfindungsgemäß vorgeschlagene Fahrwerksantrieb besitzt folgende Vorteile:
- Im Gegensatz zu fast allen bekannten Radantrieben stützt sich die Masse des Antriebes nicht auf den Rädern ab. Sie ist über die Primärfederung des Drehgestelles durch die Befestigung am DG-Rahmen abgefedert.
- Die an sich bekannte Hohlwellenkeilpaketkupplung erlaubt aufgrund ihrer Kardanik einen vom System her unwuchtfreien Antrieb bei statischen Einfederungen von ca. +/- 15 mm.
- Die beiden hintereinanderliegenden Räder sind mechanisch gekoppelt. Durch die Anordnung von 2 Läuferwellen in einem Stator ist eine mechanische Entkoppelung bei einem elektrisch steuerbaren Schlupf erreichbar. Unter Beibehaltung der Monoblock-Bauweise ist ein reinrassiger Einzelradantrieb erreicht.
- Je nach Motorausführung ist eine Motorseite mit einer Bremsscheibe versehen oder beide Motorseiten. Die Bremsanlage ist in den Antriebsbereich integriert.
- Der gesamte elektromagnetische Antrieb ist seitlich abbaubar, dabei bleibt das Fahrzeug roll- und schleppbar ohne jede Einschränkung. Montagestände werden nur für den eigentlichen Aggregatwechsel belegt. - Keine Leerzeitbelegung.

Die Erfindung wird anhand der beigefügten Figuren 1 bis 4 beispielsweise näher erläutert:
- Figur 1: zeigt schematisch in der Draufsicht den Fahrwerksantrieb für ein Drehgestell an Niederflurfahrzeugen.
- Figur 2: zeigt teils im waagerechten Schnitt, teils in der Draufsicht die Anordnung von Winkelgetriebe und doppelkardanischer Kupplung am Rad.
- Figur 3: zeigt in der Seitenansicht einen Teil der kardanischen Doppelkupplung.
- Figur 4: zeigt in der Draufsicht einen Teil der kardanischen Doppelkupplung am Rad.

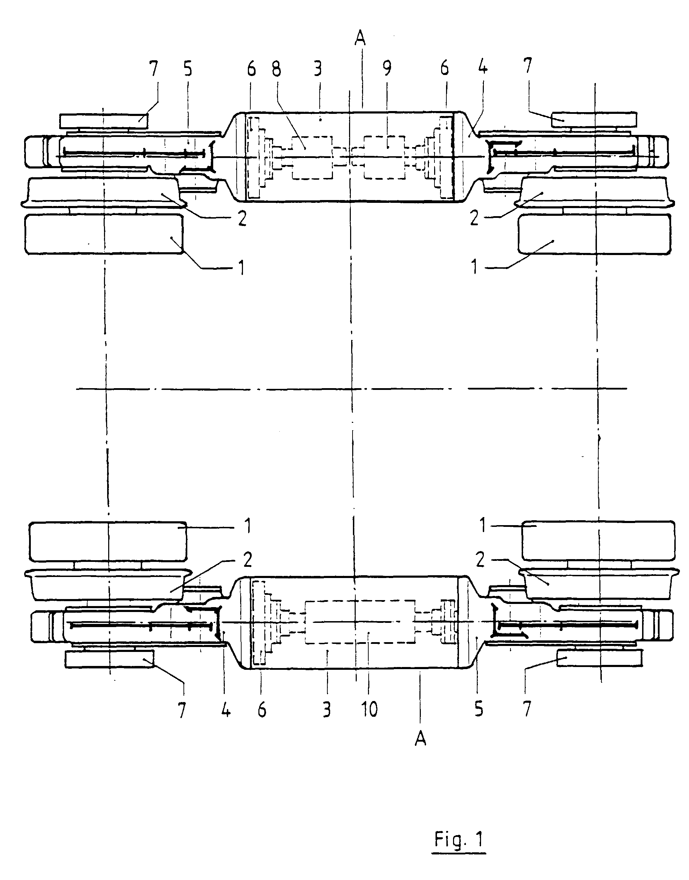

Nach Figur 1 sind die vier Räder (2) eines Drehgestelles einzeln über entsprechende Lagerungen im Drehgestellrahmen (1) gelagert. Es besteht zwischen den einzelnen Rädern (2) keine Achswellenverbindung. In diesem Raum kann der Wagenboden soweit abgesenkt werden, wie es für ein Niederflurkonzept erforderlich ist.

In Fahrzeuglängsrichtung sind die beiden hintereinander angeordneten Räder (2) eines Drehgestelles auf jeder Seite durch einen an sich bekannten Längsantrieb (A) miteinander mechanisch gekoppelt. Eine gezielte mechanische Entkoppelung - und damit ein reiner Einzelradantrieb - wird dadurch erreicht, daß der Motor (3) mit zwei Läuferwellen (8) und (9) (vgl. oberen Teil von Figur 1) statt mit einer Läuferwelle (10) (vgl. unteren Teil von Figur 1) in einem Stator vorgesehen wird. Die Blockbauweise des gesamten Antriebes wird dabei nicht verlassen.

Der aus Motor (3) und den beiden Kegelstirnradgetrieben (4) und (5) bestehende Antrieb (A) ist mit dem Drehgestellrahmen (1) fest verbunden. Je nach Erfordernis ist der Antrieb mit einer Bremsscheibe (6) versehen. Die notwendige Beweglichkeit zwischen dem jeweiligen Rad (2) und dem zugehörigen mechanischen Antrieb (A) wird über eine aus der EP 0 152 568 A1 an sich bekannte zweigelenkige, kardanisch wirkende Keilpaketkupplung (7) erreicht.

Die gesamte Masse des elektromechanischen Antriebes (A) ist nur über reichlich dimensionierte Gummielemente mit dem Laufrad (2) einerseits und dem Drehgestellrahmen (1) andererseits verbunden.

Damit ist vom Konzept her eine größtmögliche Massenentkoppelung erreicht.

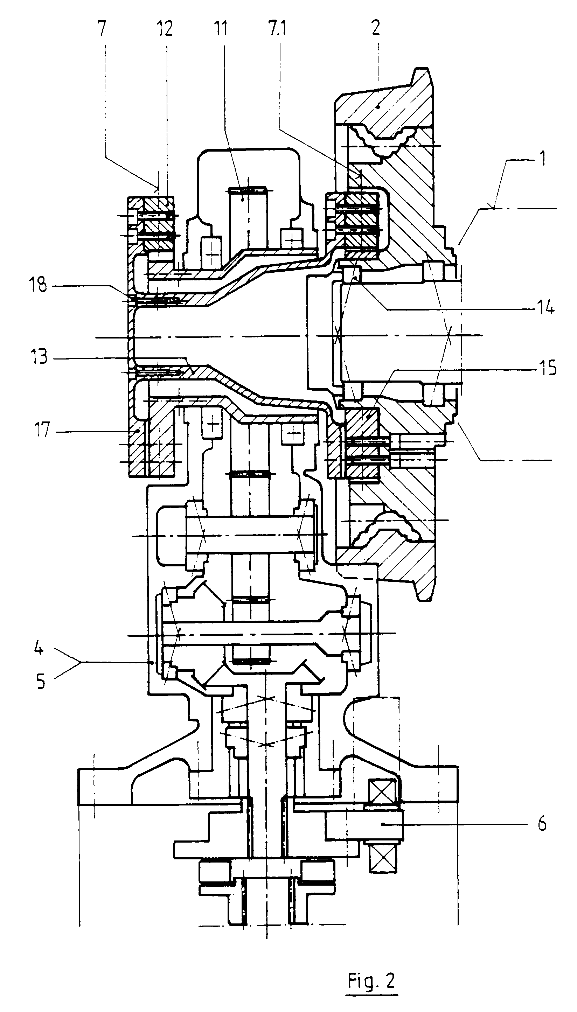

Gemäß Figur 2 wird über ein als Kegelstirnradgetriebe (4) bzw. (5) ausgebildetes Winkelgetriebe das vom Motor erzeugte Drehmoment auf das jeweilige Laufrad (2) umgelenkt und übertragen. Dabei ist das Antriebszahnrad (11) als Hohlwelle ausgebildet. Über die dem Laufrad (2) abgewandte Seite wird das Antriebsmoment über den formschlüssig mit der Hohlwelle verbundenen Hohlwellenstern (12) auf die erste Gelenkebene (7) einer Hohlwellenkeilpaketkupplung übertragen. Eine durch die Getriebehohlwelle hindurchgeführte Kardanhohlwelle (13), die wiederum auf der Radseite einen so großen Innendurchmesser aufweist, daß damit das äußere Radlager (14) umbaut werden kann, leitet das Drehmoment in die zweite Gelenkebene (7.1). Diese wiederum besteht aus den gleichen Keilpaketen (16), wie sie in der ersten Gelenkebene verwendet werden, und dem Radstern (15).

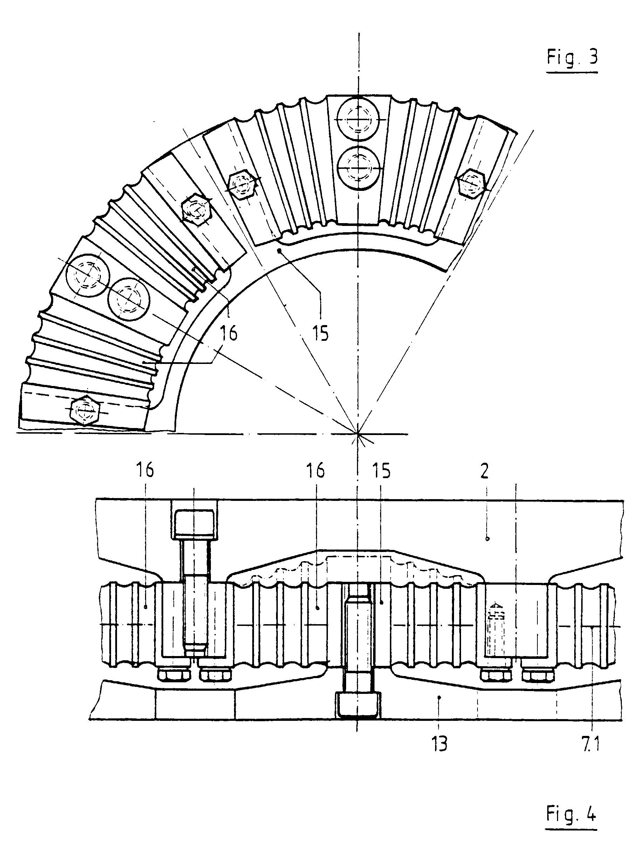

Die Verbindung zwischen Kardanhohlwelle (13) und Keilpaket (16) geschieht, wie aus den Figuren 3 und 4 erkennbar, über eine kraftschlüssige Schraubverbindung, die Verbindung Keilpaket/Radstern (15) über einen Formschluß, die Verbindung Achsstern/Laufrad (2) über eine kraftschlüssige Schraubverbindung. Der gesamte elektromechanische Antrieb kann durch Lösen der Verbindungsschrauben (18), die für die formschlüssige Verbindung der Kardanhohlwelle (13) und des Kardanhohlwellenflansches (17) sorgen, und nach Lösen der Verbindung zum Drehgestellrahmen, als Einheit seitlich abgezogen werden.

Die Rollbarkeit des Fahrzeuges bleibt gewährleistet, eine Blockade der Montagestelle entfällt.

### Bezugszeichenliste

- (1): Drehgestellrahmen
- (2): Räder
- (3): Antriebsmotor
- (4): Winkelgetriebe oder Kegelstirnradgetriebe
- (5): Winkelgetriebe oder Kegelstirnradgetriebe
- (6): Bremsscheibe
- (7): Gelenkebene
- (7.1): Gelenkebene
- (8): Läuferwelle
- (9): Läuferwelle
- (10): Läuferwelle
- (11): Antriebszahnrad als Hohlwelle
- (12): Hohlwellenstern
- (13): Kardanhohlwelle
- (14): Radlager
- (15): Radstern
- (16): Keilpaket
- (17): Kardanhohlwellenflansch
- (18): Verbindungsschrauben

- (A): Antrieb

## Patentansprüche

1. Angetriebenes Fahrwerk für Schienenfahrzeuge, insbesondere für Drehgestelle an Niederflurfahrzeugen, wobei
a) die Räder (2) einzeln gelagert sind,
b) auf jeder Fahrwerkslängsseite jeweils zwischen zwei hintereinander angeordneten Rädern (2) am Drehgestellrahmen (1) oder Wagenkasten ein elektromechanischer Antrieb (A) befestigt ist,
c) die Räder eines Antriebes einen kurzen Radstand besitzen,
d) die in Wagenlängsrichtung angeordneten Läuferwellen (8, 9, 10) des Antriebes (A) über jeweils ein Winkelgetriebe (4, 5) und eine kardanische Doppelkupplung (7, 7.1) mit den Rädern verbunden sind.

2. Angetriebenes Fahrwerk nach Anspruch 1, **dadurch gekennzeichnet,** daß der Antrieb (A) zwei Läuferwellen (8, 9) mit einem vorzugsweise elektrisch begrenzten gegenseitigen Schlupf besitzt.

3. Angetriebenes Fahrwerk nach Anspruch 1 oder 2, **dadurch gekennzeichnet,** daß in den elektromechanischen Antriebsblock (A) ein- oder beidseitig eine Bremse (6) integriert ist.

4. Angetriebenes Fahrwerk nach Anspruch 1, 2 oder 3, **dadurch gekennzeichnet,** daß die kardanische Doppelkupplung (7, 7.1) außen an den Rädern (2), vorzugsweise zwischen Kardanhohlwellenflansch (17) und Kardanhohlwelle (13), über Schrauben (18) trennbar ist.

5. Angetriebenes Fahrwerk nach mindestens einem der vorhergehenden Ansprüche, **dadurch gekennzeichnet,** daß der elektromechanische Antrieb (A) gemeinsam mit den Winkelgetrieben (4, 5) und der kardanischen Doppelkupplung (7, 7.1) als Monoblock-Bauelement ausgebildet ist.

## Claims

1. Driven running gear for rail vehicles, in particular for pivoted bogies on low-floor vehicles, wherein
a) the wheels (2) are individually mounted,
b) an electromechanical drive (A) is fixed to each longitudinal side of the running gear between two wheels (2) arranged one behind the other on the frame (1) of the pivoted bogie or on the body,
c) the wheels of a drive have a short wheel base,
d) the rotor shafts (8, 9, 10) of the drive (A), arranged in the longitudinal direction of the carriage, are each connected to the wheels via an angular gear (4, 5) and a cardan double coupling (7, 7.1).

2. Driven running gear according to claim 1, characterised in that the drive (A) has two rotor shafts (8, 9) with preferably electrically limited mutual slip.

3. Driven running gear according to claim 1 or 2, characterised in that a brake (6) is incorporated into the electromechanical drive block (A) on one or both sides.

4. Driven running gear according to claim 1, 2 or 3, characterised in that the cardan double coupling (7, 7.1) is disengageable on the outside of the wheels (2) by means of screws (18), preferably between a cardan hollow-shaft flange (17) and a cardan hollow shaft (13).

5. Driven running gear according to at least one of the preceding claims, characterised in that the electromechanical drive (A), together with the angular gears (4, 5) and the cardan double coupling (7, 7.1), is formed as a monobloc component.

## Revendications

1. Train de roulement entraîné pour véhicules ferroviaires, notamment pour des bogies de véhicules à plate-forme surbaissée, dans lequel
a) les roues (2) sont montées individuellement,
b) un entraînement électromécanique (A) est respectivement fixé sur le cadre de bogie (1) ou la caisse de voiture sur chaque côté longitudinal du train de roulement, entre deux roues (2) disposées l'une derrière l'autre,
c) les roues d'un entraînement possèdent un court empattement,
d) les arbres de rotor (8, 9, 10) de l'entraînement (A), disposés dans la direction longitudinale de la voiture, sont respectivement reliés aux roues par l'intermédiaire d'un engrenage conique (4, 5) et d'un accouplement double (7, 7.1) à la Cardan.

2. Train de roulement entraîné selon la revendication 1, **caractérisé** en ce que l'entraînement (A) possède deux arbres de rotor (8, 9) avec un patinage mutuel qui est de préférence limité électriquement.

3. Train de roulement entraîné selon la revendication 1 ou 2, **caractérisé** en ce qu'un frein (6) est intégré d'un côté ou des deux côtés dans le bloc d'entraînement électromécanique (A).

4. Train de roulement entraîné selon la revendication 1, 2 ou 3, **caractérisé** en ce que l'accouplement double (7, 7.1) à la Cardan peut, au moyen de boulons (18), être séparé à l'extérieur des roues (2), de préférence entre la bride (17) d'arbre de cardan creux et l'arbre de cardan creux (13).

5. Train de roulement entraîné selon au moins une des revendications précédentes, **caractérisé** en ce que l'entraînement électromécanique (A) est réalisé sous forme d'élément monobloc conjointement avec les engrenages coniques (4, 5) et l'accouplement double (7, 7.1) à la Cardan.
